# FASCICULE DE BREVET EUROPEEN

(11) **EP 1 881 105 B1**
(45) Date de publication et mention de la délivrance du brevet: **04.03.2009**
(21) Numéro de dépôt: 07301076.1
(22) Date de dépôt: 31.05.2007
(51) Int. Cl.: D21C 5/02, B03D 1/02, B03D 1/08

(54) **Procédé de réduction de la teneur en tensioactifs au cours du désencrage du papier et dispositif de désencrage mettant en oeuvre ce procédé**
Verfahren zur Regulierung des Tensidgehalts während des Deinking von Papier und Deinkingvorrichtung, die dieses Verfahren umsetzt
Method of reducing the amount of surface active agents when deinking paper and deinking device implementing this method

(30) Priorité: 21.07.2006 FR 0653060
(43) Date de publication de la demande: 23.01.2008
(73) Titulaire: CENTRE TECHNIQUE DE L'INDUSTRIE DU PAPIER, CARTON ET CELLULOSE, 38000 Grenoble (FR)
(72) Inventeur: Carre, Bruno, 38000, GRENOBLE (FR)
(74) Mandataire: Vuillermoz, Bruno

(56) Documents cités:
- EP-A1- 0 657 578
- EP-A2- 0 478 505
- WO-A-97/18348
- WO-A-99/02770
- WO-A2-97/22750
- US-A- 5 817 212

## Description

### DOMAINE TECHNIQUE

La présente invention concerne un procédé amélioré de désencrage du papier, ainsi qu'un dispositif adapté à la mise en oeuvre d'un tel procédé. Elle s'adresse à toutes les usines de désencrage utilisant le procédé de flottation par air dispersé.

Plus précisément, une étape supplémentaire de flottation par air dispersé est mise en oeuvre sur les eaux de désencrage afin de réduire leur teneur en substances tensioactives. Il en résulte une amélioration de la sélectivité et de l'efficacité de flottation et une réduction des pertes.

### ETAT ANTERIEUR DE LA TECHNIQUE

Le recyclage à grande échelle des papiers et cartons est maintenant une réalité au niveau mondial, puisque les fibres recyclées représentent environ la moitié de la ressource fibreuse nécessaire pour la production mondiale.

Parmi les étapes du procédé de recyclage, le désencrage n'est appliqué que pour le recyclage des papiers blancs imprimés (soit environ un tiers des papiers à recycler en Europe, équivalents à 15 millions de tonnes), et vise à éliminer l'encre de la suspension de papiers récupérés, tels que journaux, magazines, papiers de bureaux...

L'élimination de cette encre se fait essentiellement par le procédé de flottation par air dispersé. Ce procédé utilise les différences de propriétés de surface entre les éléments de la suspension à séparer (les encres hydrophobes) et les autres composants de la suspension : fibres et fines cellulosiques, charges minérales. Les encres hydrophobes dans la suspension ont naturellement tendance à flotter à la surface de la suspension, car elles ont plus d'affinité avec l'air extérieur qu'avec le milieu liquide dans lequel elles baignent.

Lorsque l'on ajoute des bulles d'air à cette suspension, ce qui constitue le principe de la flottation, les particules d'encre vont naturellement avoir tendance à s'adsorber à leur interface. Les bulles d'air les transportent ensuite à la surface, formant généralement une mousse concentrée en encre. Lors d'une étape ultérieure, la mousse est éliminée, soit par aspiration, soit par débordement, soit par légère surpression.

Pour que la flottation soit suffisamment efficace et sélective, plusieurs conditions doivent être réunies :
➢ les particules d'encre à éliminer doivent être localement hydrophobes;
➢ les particules d'encre à éliminer doivent présenter une certaine gamme de tailles (entre 5 et 50-100 µm), nécessaire à leur bonne flottation ;
➢ la surface des bulles d'air introduites dans la cellule de flottation doit rester hydrophobe de façon à capturer les particules d'encre hydrophobes ; l'interaction qui en découle dans la traînée de la bulle à sa surface conduit ainsi à un accrochage efficace de l'encre lors de son transport vers la surface de la cellule ;
➢ les bulles d'air formées doivent avoir une certaine taille permettant aux particules à flotter d'être « protégées » dans la traînée de la bulle, notamment contre le risque de décrochage lors de l'ascension des bulles à la surface de la cellule ; les particules d'encre à éliminer ayant des tailles comprises entre 5 et 50 - 100 µm, les bulles d'air doivent avoir un diamètre nettement supérieur, typiquement de l'ordre du millimètre ;
➢ la force d'adhérence liant les particules à flotter aux bulles d'air doit être suffisante pour éviter que les particules se décrochent pendant l'ascension des bulles d'air vers la surface de la cellule ;
➢ une fois les particules transférées à la surface de la cellule, la mousse formée doit être suffisamment stable pour être éliminée sans être éclatée par les dispositifs de collecte des mousses (drainage pour améliorer la sélectivité), mais pas trop au risque d'entraîner beaucoup de matières de valeur (fibres et fines), indésirables dans la mousse.

Ces conditions optimales pour la flottation sont toutefois difficiles à réunir :
- sur l'hydrophobie des particules d'encre : c'est généralement le cas avec des particules d'encre offset, héliogravure, toner.... Ce n'est par contre pas le cas avec des particules d'encres à l'eau, type flexo ou jet d'encre. En outre, même en présence de particules d'encre hydrophobe, cette hydrophobie peut être modifiée par adsorption de tensioactifs, introduits intentionnellement au niveau du pulpeur, ou relargués par les papiers récupérés. Ainsi, l'addition de tensioactifs non ioniques, ayant des propriétés détergentes pour décrocher l'encre, a plutôt tendance à réduire l'hydrophobie des particules d'encre alors que l'addition de savon de calcium saturé a plutôt tendance à renforcer l'hydrophobie.
- sur la distribution de la taille des particules d'encre : mises à part les encres à l'eau (flexo et jet d'encre), la taille des particules se trouve généralement dans la plage de taille requise. Outre le renforcement des propriétés hydrophobes, l'addition de savon permet généralement de collecter les particules d'encre et ainsi d'augmenter la taille des agrégats hydrophobes à flotter.
- sur l'hydrophobie des bulles d'air : créées dans une phase liquide pure, les bulles d'air présentent généralement une surface hydrophobe. En revanche, en présence de substances tensioactives, ces bulles d'air adsorbent à leur interface ces substances tensioactives, générant ainsi des bulles beaucoup mieux stabilisées dans l'eau, et donc beaucoup plus hydrophiles. Leur capacité à collecter des particules hydrophobes s'en trouve ensuite fortement réduite. La présence de substances tensioactives relarguées par les matières premières (par exemple provenant de composés du bois relargués lors du pulpage ou du blanchiment, ou de composés de la couche lors du recyclage de papiers couchés, ...) nuit donc fortement aux capacités collectrices des bulles d'air lors de la flottation.
- sur la répartition de la taille des bulles d'air : la distribution de taille des bulles d'air dépend tout d'abord du type et de la géométrie des injecteurs utilisés. Cependant, la présence de substances tensioactives dans l'eau ou la pâte dans laquelle sont formées les bulles d'air a une forte incidence sur la taille et la distribution de taille des bulles. En effet, une faible quantité de tensioactifs conduit à créer des bulles d'air qui peuvent d'une part être trop petites pour collecter efficacement ou en tous cas protéger les particules accrochées dans le sillage de la bulle, et d'autre part qui peuvent être hydrophiles comme vu précédemment. Par ailleurs, l'adsorption des tensioactifs à l'interface avec les bulles d'air va également gouverner la capacité des bulles à ensuite s'agglomérer, lorsqu'elles vont rentrer en collision, des bulles fortement stabilisées par des tensioactifs ayant peu de chance de s'agglomérer.
- sur la force d'adhérence des particules d'encre aux bulles d'air : cette force est là encore fortement influencée par l'adsorption de tensioactifs à l'interface eau / air de la bulle. Plus l'énergie de surface de la bulle est réduite par l'adsorption de tensioactifs, plus faible sera l'énergie d'adhérence et donc l'efficacité de la collecte. Là encore, les tensioactifs vont fortement gêner la collecte et le transport des particules vers la surface.
- en ce qui concerne la stabilité des mousses : la présence de substances tensioactives à l'interface avec les bulles d'air conduit à des petites bulles dans la mousse qui ont du mal à « casser ». La grande surface spécifique offerte par les nombreuses interfaces air/eau résultant des petites bulles conduit malheureusement à un entraînement important de petites matières présentes dans la suspension à flotter. Il faut que les bulles soient tout de même légèrement stabilisées de façon à créer de la mousse. En revanche, là encore, la trop grande quantité de substances tensioactives adsorbées à l'interface offerte par les bulles est néfaste à une bonne sélectivité d'élimination de l'encre.

En conclusion, le problème principal du procédé de flottation des encres lors de l'opération de désencrage est surtout un problème d'efficacité d'élimination et de sélectivité de flottation, puisque les substances tensioactives présentes dans l'eau réduisent à la fois l'hydrophobie de la surface des bulles d'air et l'hydrophobie des particules d'encre à éliminer. Par ailleurs, ces substances tensioactives non voulues réduisent la sélectivité de flottation car elles participent à l'entraînement de matières utiles, telles que fibres, fines et charges minérales.

Il existe donc un besoin évident de contrôler la teneur en tensioactifs au cours du procédé de désencrage, et notamment de la réduire pour favoriser le désencrage par flottation.

Le document EP-A-0 657 578 décrit un procédé de désencrage en deux boucles de flottation. Toutes deux sont réalisées sur la pâte à papier, avec d'abord la pré-flottation pour enlever les particules d'encre décrochées lors de la phase de pulpage, puis la post-flottation pour éliminer les particules d'encre décrochées lors de la phase de dispersion (Fig. 3). Les deux étapes de flottation par air dispersé sont donc réalisées sur la pâte à papier en tant que telle, et pas sur les eaux du procédé de désencrage comme dans l'invention.

Le document EP-A-0 478 505 décrit un procédé pour désencrer des mélanges de papier contenant des impressions à base d'encre à l'eau. Ces encres à l'eau nécessitent l'addition de tensioactifs spécifiques pour essayer d'agglomérer les particules d'encre hydrophiles et les rendre hydrophobes. Il y a bien une étape de flottation par air dispersé mais là encore, elle est réalisée sur la totalité de la pâte à papier pour éliminer l'encre, et non sur les eaux de process pour éliminer les substances tensioactives réduisant la sélectivité de flottation.

Le document WO 97/18348 décrit une chimie spécifique destinée à éliminer, conjointement à la flottation des encres réalisée sur la totalité de la pâte, les charges minérales. Les tensioactifs dont il est fait mention sont rajoutés volontairement pour permettre la flottation sélective des charges minérales conjointement à l'encre. Ceci est très éloigné de la flottation par air dispersé sur les eaux pour éliminer les substances tensioactives relarguées par les papiers récupérés, de façon à améliorer la sélectivité.

Le document WO 97/22750 décrit, lui-aussi, une chimie à base de tensioactifs permettant de mieux éliminer l'encre par flottation par air dispersé, à partir d'une suspension de pâte à 1 %. L'addition de tensioactifs permet d'agglomérer sélectivement les particules d'encre pour mieux les flotter. Ceci est bien distinct de l'invention qui propose d'éliminer les substances tensioactives présentes dans l'eau de process avant sa recirculation, car celles-ci sont nuisibles à une bonne sélectivité de flottation des particules d'encre au moment du traitement de la pâte.

De même, le document US 5,817,212 décrit une chimie à base de tensioactifs et d'enzymes permettant de mieux décrocher l'encre au pulpeur et ensuite de la flotter plus efficacement.

Enfin, le document WO 99/02770 décrit une chimie à base de tensioactifs et de polymères cationiques pour agglomérer les particules d'encre de façon à mieux les flotter lors d'une étape de flottation par air dispersé sur des eaux de lavage fortement concentrées en matières en suspension (charges, fines cellulosiques).

### OBJET DE L'INVENTION

En premier lieu, l'invention concerne donc un procédé de désencrage comprenant au moins une étape de séparation des substances tensioactives gênantes à plus d'un titre, comme mentionné ci-dessus.

On entend par « substances tensioactives » des composés chimiques qui, introduits dans un liquide, en abaissent la tension superficielle, ce qui a pour effet d'en augmenter les propriétés mouillantes. Il peut par exemple s'agir d'acides gras ou de tensioactifs non ioniques. Dans le procédé de désencrage, ces substances sont essentiellement relarguées par les matières premières, par exemple provenant de composés du bois relargués lors du pulpage ou du blanchiment, ou de composés de la couche lors du recyclage de papiers couchés.

Il est à noter que dans le procédé de désencrage, les substances tensioactives jouent un rôle puisqu'elles favorisent la formation des mousses dans la flottation par air dispersé mise en oeuvre pour éliminer les particules d'encre. Toutefois, lorsqu'elles sont en quantités trop importantes, elles nuisent à la sélectivité (éliminer l'encre et non pas les matières intéressantes telles que fibres, fines et charges) de flottation, et donc augmentent les pertes, tout en diminuant l'efficacité de la collecte. Le but de l'étape de séparation des substances tensioactives n'est donc pas de les éliminer totalement mais d'en contrôler, et notamment d'en réduire la teneur, pour atteindre une gamme la plus adaptée au désencrage par flottation. Il s'agit donc d'une élimination partielle des substances tensioactives.

Dans le cadre de l'invention, l'étape de séparation des substances tensioactives est réalisée grâce à la technique de flottation par air dispersé.

Cette technique consiste à séparer les substances tensioactives de l'eau qui les contient, en les entraînant à la surface par l'insufflation au sein de la masse liquide, de bulles d'air présentant un diamètre pouvant aller de quelques centaines de microns à quelques millimètres. Il en résulte une mousse de flottation riche en substances tensioactives isolées. Cette mousse peut alors être séparée du liquide traité, par aspiration ou débordement par exemple.

La gamme optimale en tensioactifs à atteindre, qui peut être quantifiée à l'aide de la mesure de la tension superficielle, doit être définie au cas par cas, car elle dépend notamment de la nature des tensioactifs en présence. Le critère le plus adapté pour estimer cette gamme est la qualité de la mousse de flottation au niveau du désencrage. Il est alors possible d'ajuster l'élimination des tensioactifs en réglant le taux d'air insufflé dans l'étape de flottation par air dispersé pour séparer les substances tensioactives.

Dans le procédé de désencrage, il est usuel de pratiquer la flottation par air dispersé sur la pâte traitée, et cela pour la débarrasser des particules d'encre. Dans le cadre de l'invention, il a été mis en évidence que cette technique était en outre particulièrement adaptée pour réduire la teneur en substances tensioactives des eaux du procédé de désencrage.

Il s'agit donc ici d'une étape qui vient en outre de l'étape d'élimination classique des particules d'encre par flottation, étape couramment mise en oeuvre directement sur la pâte à papier, voire sur des eaux de lavages riches en substances utiles.

Une autre contribution de l'invention a été de déterminer les endroits les plus judicieux du procédé de désencrage, où la séparation des substances tensioactives doit être réalisée.

En effet, la séparation de ce flux de tensioactifs doit se faire en minimisant le plus possible les pertes en matières en suspension et les pertes en eau, les usines de recyclage étant amenées à réduire de plus en plus leur consommation d'eau.

Plusieurs critères doivent donc être remplis, de façon parallèle :
- le procédé de séparation doit avoir une bonne efficacité d'élimination des substances tensioactives. Ce résultat est obtenu grâce à la technique de flottation par air dispersé.
- pour déconcentrer le plus possible les eaux du procédé, le traitement doit être réalisé sur un flux riche en substances tensioactives.
- pour réduire au maximum les pertes en solide, le traitement doit être réalisé sur un flux faiblement chargé en matières en suspension.
- pour réduire les pertes en eau, le procédé d'élimination des tensioactifs doit concentrer le plus possible le rejet riche en tensioactifs.

Dans un mode de réalisation hautement privilégié, le traitement est réalisé sur les eaux d'épaississage de l'ensemble des mousses de désencrage. Ceci concerne donc à la fois les mousses issues des boucles de flottation et des eaux de traitement de ces boucles. En pratique, ces eaux sont récupérées sous la presse à boue. De fait, ce sont les plus concentrées en tensioactifs.

Toutefois, ce mode de réalisation privilégié ne peut être mis en oeuvre que si ces eaux sont recyclées, ce qui n'est pas le cas dans un certain nombre d'usines. A défaut, le traitement est alors réalisé sur les eaux de première boucle de flottation. Avantageusement, cette étape de séparation est mise en oeuvre sur l'accepté de la flottation par air dissous qui traite une partie des eaux de première boucle. Si cette étape de flottation par air dissous n'est pas mise en oeuvre, l'étape de flottation par air dispersé est réalisée sur les filtrats clairs du filtre à disque de première boucle.

Les eaux de première boucle correspondent aux eaux de process, récupérées lors du premier épaississage de la pâte désencrée, et recyclées pour les différentes dilutions : à la sortie du pulpeur, pour la pré épuration ainsi que pour la flottation et le classage fin.

Un second mode de réalisation privilégié consiste à réaliser l'étape de séparation des substances tensioactives sur les mousses issues de la flottation des encres de la pâte, après leur épaississement. Ces mousses sont également très chargées en tensioactifs et le fait de traiter sélectivement leurs eaux d'épaississage permet de réduire le volume à traiter.

En pratique, la flottation par air dispersé génère une mousse dite de flottation dans laquelle les substances tensioactives sont séparées et prisonnières sous forme concentrée. Comme déjà dit, ces mousses sont destinées à être éliminées après leur récupération, classiquement par débordement ou par aspiration.

Un procédé selon l'invention prévoit l'évacuation de cette mousse de flottation directement dans une station d'épuration. De manière avantageuse, la mousse de flottation est traitée préalablement à l'ozone, ce qui facilite la dégradation des tensioactifs.

Une autre possibilité est d'introduire ce flux en milieu de table d'égouttage des boues, pour écouler les tensioactifs dans les boues.

Selon un second aspect, l'invention concerne un dispositif de désencrage adapté à la mise en oeuvre du procédé décrit précédemment.

Un dispositif de désencrage selon l'invention se caractérise donc par la présence d'au moins une cellule adaptée à la flottation par air dispersé et destinée à la séparation des substances tensioactives des eaux de désencrage, outre celles classiquement utilisées pour le désencrage de la pâte.

En pratique, une telle cellule est conçue de façon à permettre des temps de contact, entre bulles d'air et eau à traiter, suffisamment longs. Ainsi, tous les tensioactifs, même à cinétique d'adsorption lente, ont le temps de migrer vers les interfaces air / eau des bulles d'air.

Le taux d'air introduit dans la cellule doit être suffisamment grand pour que la surface d'adsorption des tensioactifs soit suffisante. De façon à minimiser les pertes en eau, plusieurs étages sont nécessaires, selon l'efficacité de chacun. Une des façons de minimiser les pertes en eau est aussi d'avoir une cellule avec une épaisseur de mousse suffisamment importante pour assécher ou laisser drainer la mousse concentrée en tensioactifs.

La cellule de flottation par air dispersé mise en oeuvre comprend avantageusement un système de régulation du taux d'air permettant de contrôler la quantité de tensioactifs séparés. En outre, elle est avantageusement équipée en sortie d'un dispositif de mesure de la tension superficielle ou d'un analyseur d'aspect des mousses de flottation (tel que le Visiofroth^{®} proposé par la société Metso Minerals).

Un système de désencrage selon l'invention est au minimum équipé d'un pulpeur et d'une boucle de flottation. Avantageusement, il intègre une seconde boucle de flottation et encore plus avantageusement, un système de recyclage des eaux d'épaississage de l'ensemble des mousses de flottation.

Selon l'invention, la cellule de flottation par air dispersé permettant de réduire la teneur en tensioactifs des eaux de désencrage peut être intégrée en différents points du système de désencrage.

Selon une première alternative, la cellule de flottation par air dispersé est située sur le circuit des eaux d'épaississage du filtre à disque de la première boucle de flottation.

Si la première boucle de flottation est équipée d'une cellule de flottation par air dissous permettant d'éliminer la matière en suspension dans les eaux de process, la cellule de flottation par air dispersé est avantageusement située à la sortie de la cellule de flottation par air dissous, ce qui minimise les pertes.

Une autre alternative encore plus avantageuse est de disposer la cellule de flottation sur le circuit des eaux d'épaississage des mousses de la cellule de flottation destinée au désencrage, à condition, bien entendu, d'avoir épaissi ces mousses. Si le dispositif de désencrage dispose d'une seconde boucle de flottation, la cellule de flottation traite l'ensemble des mousses de flottation collectées.

Dans le cas où le dispositif de désencrage intègre un système de recyclage des eaux d'épaississage de l'ensemble des mousses de flottation (dans le cas d'une usine souhaitant réduire sa consommation d'eau fraîche), une autre solution avantageuse consiste à intégrer la cellule de flottation sur le circuit des eaux d'épaississage des mousses de désencrage, notamment les eaux d'épaississage de la presse à boue.

En outre, le dispositif de désencrage selon l'invention est avantageusement doté d'un système de récupération des mousses générées par la cellule de flottation par air dispersé selon l'invention. Dans un premier système, il s'agit d'un raccordement entre la cellule de flottation et une station d'épuration, préférentiellement via une unité de traitement à l'ozone. Dans une seconde alternative, la cellule de flottation est raccordée à une table d'égouttage des boues.

La présente invention permet donc d'améliorer la sélectivité et l'efficacité de flottation en vue du désencrage et du recyclage des vieux papiers.

### EXEMPLE DE REALISATION

L'exemple de réalisation qui suit, à l'appui de la figure annexée, a pour but d'illustrer l'invention mais n'est en aucun cas limitatif.

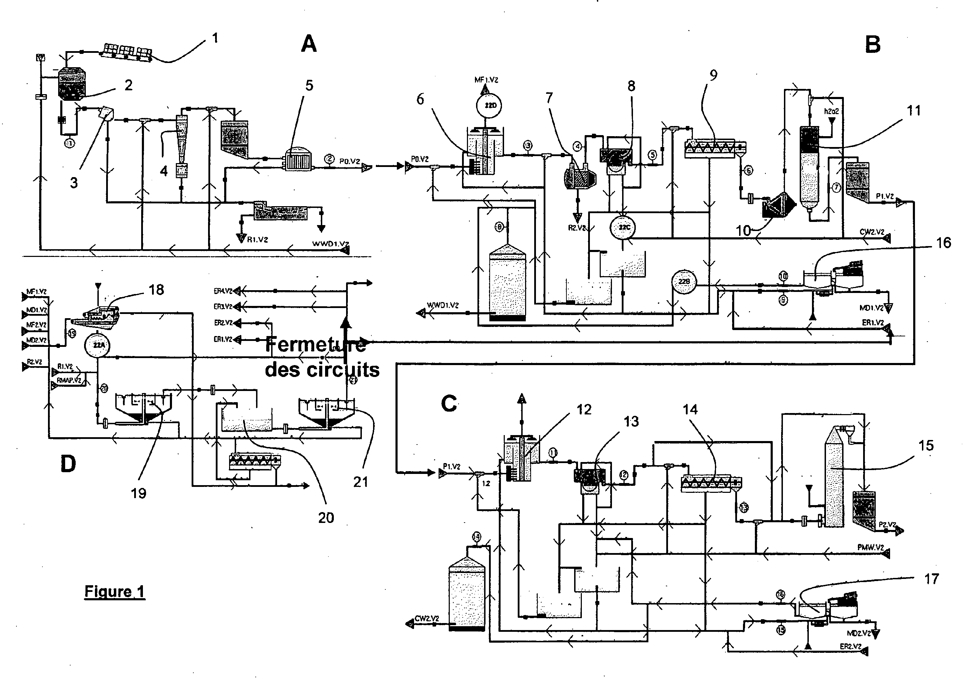

La figure 1 illustre un dispositif de désencrage selon l'invention permettant la mise en oeuvre du procédé de désencrage avantageux tel que décrit. Plus précisément, la figure 1A a trait au pulpeur, les figures 1B et 1C schématisent les deux boucles de flottation successives. Quant à la figure 1D, elle illustre le système de traitement des rejets.

Comme illustré à la figure 1A, les papiers récupérés **(1)** sont tout d'abord introduits dans un pulpeur **(2),** dont l'objectif est de remettre en suspension les papiers récupérés. Pour faciliter ce défibrage et décrocher l'encre de la surface des fibres, de la soude, du silicate de sodium et un savon sont introduits dans le pulpeur **(2).**

Après remise en suspension à 15 - 20 %, la pâte défibrée est ensuite diluée à 3 - 4 % et tamisée **(3)** au travers de trous d'environ 4-6 mm de diamètre pour éliminer les gros contaminants. Après dilution supplémentaire jusqu'à 2 - 3 %, la pâte est ensuite épurée à l'aide d'un épurateur tourbillonnaire ou hydrocyclone **(4)** de façon à éliminer les particules de densité supérieure à 1, telles que agrafes, morceaux de verre.... Après nouvelle dilution, la pâte est ensuite de nouveau tamisée dans un classeur **(5)** à petit trous (1,8 mm de diamètre) ou à fentes fines (0,2 mm).

Ensuite, dans une première boucle de flottation (Fig. 1B), une nouvelle dilution à environ 1 % précède l'étape de flottation **(6),** dont l'objectif est d'éliminer l'encre.

Cette étape est ensuite suivie d'une nouvelle étape de tamisage **(7)** (classeur à fentes fines de 0,15 mm ou 0,1 mm). La pâte est alors épaissie par un filtre à disque **(8)** (jusqu'à environ 15 %), puis par une presse à vis **(9)** jusqu'à environ 30 %, avant d'être dispersée (10) pour fragmenter, en deçà du visible, tous les contaminants encore visibles à l'oeil nu. La pâte peut ensuite être blanchie **(11),** généralement par un blanchiment oxydant, avant d'être envoyée vers la seconde boucle de flottation.

Dans la deuxième boucle de flottation (Fig. 1C), la pâte est donc de nouveau flottée **(12),** puis épaissie par un filtre à disque **(13)** et une presse à vis **(14),** avant d'être éventuellement de nouveau blanchie par un blanchiment réducteur **(15).**

Au niveau du bloc diagramme Rejets (Fig. 1D) sont rassemblés les rejets des 2 boucles de flottation, à savoir les mousses de flottation **(6)** et **(12)** et les mousses issues des flottations par air dissous **(16, 17),** résultant de la clarification des eaux de process des deux boucles de désencrage. L'ensemble de ces rejets est donc épaissi sur une presse à boue **(18),** les eaux d'épaississage étant soit recyclées dans le procédé (au niveau de la boucle 1 de flottation), soit envoyées à la station d'épuration comprenant un traitement primaire **(19),** un bassin d'aération **(20)** et le traitement secondaire biologique **(21).**

La cellule de flottation par air dispersé permettant de réduire la teneur en tensioactifs des eaux de désencrage selon l'invention **(22)** peut donc être située à différents emplacements du système de désencrage :
- soit en position **22A,** sur les eaux d'épaississage de la presse à boue **(18),** qui sont particulièrement concentrées en substances tensioactives ;
- soit en position **22B,** sur les eaux clarifiées de la première boucle, provenant de la flottation par air dissous **(16),** exemptes de matières en suspension ce qui réduit les pertes ;
- soit en position **22C,** directement sur les filtrats clairs du filtre à disque **(8),** dans des eaux également peu chargées en matières en suspension de façon à également réduire les pertes matières ;
- soit, enfin, en position **22D,** sur les mousses de flottation **(6),** moyennement un épaississage de ces dernières.

## Revendications

1. Procédé de désencrage du papier comprenant, outre une étape d'élimination des particules d'encre par flottation, une étape supplémentaire de séparation des substances tensioactives par flottation par air dispersé réalisée sur tout ou partie des eaux du procédé de désencrage.

2. Procédé de désencrage du papier selon la revendication 1 ***caractérisé* en ce que** l'étape de séparation des substances tensioactives est réalisée sur les eaux d'épaississage de l'ensemble des mousses de désencrage.

3. Procédé de désencrage du papier selon la revendication 1 ***caractérisé* en ce que** l'étape de séparation des substances tensioactives est réalisée sur les eaux de première boucle de flottation, avantageusement sur l'accepté de flottation par air dissous ou bien sur les filtrats clairs du filtre à disque.

4. Procédé de désencrage du papier selon la revendication 1 ***caractérisé* en ce que** l'étape de séparation des substances tensioactives est réalisée sur les eaux d'épaississage des mousses de flottation.

5. Procédé de désencrage du papier selon l'une des revendications précédentes ***caractérisé* en ce qu'**il comprend une étape d'élimination de la mousse de flottation contenant les substances tensioactives séparées.

6. Procédé de désencrage du papier selon là revendication 5 ***caractérisé* en ce que** la mousse de flottation est traitée à l'ozone avant d'être évacuée dans une station d'épuration.

7. Procédé de désencrage du papier selon la revendication 5 ***caractérisé* en ce que** la mousse de flottation est évacuée au niveau d'une table d'égouttage des boues.

8. Dispositif de désencrage du papier équipé d'un pulpeur (2) et d'une première boucle de flottation par air dispersé (6) destinée à éliminer l'encre de la pâte et comprenant au moins une cellule de flottation par air dispersé (22) destinée à la séparation des substances tensioactives des eaux de désencrage.

9. Dispositif de désencrage du papier selon la revendication 8 ***caractérisé* en ce que** la cellule de flottation (22C, 22B) est disposée sur le circuit des eaux d'épaississage du filtre à disque (8) ou à la sortie de la cellule de flottation par air dissous (16) dans la première boucle.

10. Dispositif de désencrage du papier selon la revendication 8 ***caractérisé* en ce qu'**il comprend éventuellement une seconde boucle de flottation (12) et **en ce que** la cellule de flottation (22D) est située sur le circuit des mousses des cellules de flottation (6, 12) pour désencrage et en aval d'un système de récupération et d'épaississage des mousses de flottation.

11. Dispositif de désencrage du papier selon la revendication 8 ***caractérisé* en ce qu'**il comprend un système de recyclage des eaux d'épaississage de l'ensemble des mousses de flottation et **en ce que** la cellule de flottation (22A) est située sur le circuit des eaux d'épaississage des mousses de désencrage, avantageusement à la sortie de la presse à boue (18).

12. Dispositif de désencrage du papier selon l'une des revendications 8 à 11 ***caractérisée* en ce que** la cellule de flottation est raccordée à une station d'épuration (19, 20, 21) pour l'évacuation des mousses de flottation.

13. Dispositif de désencrage du papier selon l'une des revendications 8 à 11 ***caractérisée* en ce que** la cellule de flottation est raccordée à une table d'égouttage des boues.

## Claims

1. Method for de-inking paper including, as well as a step of removing ink particles by flotation, an additional step of separating the surface-active substances by dispersed air flotation implemented on all or part of the de-inking process waters.

2. Method for de-inking paper as claimed in claim 1 **characterized in that** the surface-active substance separation step is implemented on all the de-inking froth thickening waters.

3. Method for de-inking paper as claimed in claim 1 **characterized in that** the surface-active substance separation step is implemented on the waters of the first flotation loop, to advantage on the accept from the dissolved air flotation or on the clear filtrates of the disk filter.

4. Method for de-inking paper as claimed in claim 1 **characterized in that** the surface-active substance separation step is implemented on the flotation froth thickening waters.

5. Method for de-inking paper as claimed in one of the previous claims **characterized in that** it includes a step of removing the flotation froth containing the separated surface-active substances.

6. Method for de-inking paper as claimed in claim 5 **characterized in that** the flotation froth is treated with ozone before being discharged into a treatment plant.

7. Method for de-inking paper as claimed in claim 5 **characterized in that** the flotation froth is discharged on a sludge dewatering table.

8. Device for de-inking paper equipped with a pulper (2) and a first dispersed air flotation loop (6) intended to remove the ink from the pulp and including at least one dispersed air flotation cell (22) intended to separate the surface-active substances from the de-inking waters.

9. Device for de-inking paper as claimed in claim 8 **characterized in that** the flotation cell (22C, 22B) is placed on the thickening water circuit of the disk filter (8) or at the output of the dissolved air flotation cell (16) in the first loop.

10. Device for de-inking paper as claimed in claim 8 **characterized in that** it possibly includes a second flotation loop (12) and **in that** the flotation cell (22D) is located on the froth circuit of the flotation cells (6, 12) for de-inking and downstream of a flotation froth recovery and thickening system.

11. Device for de-inking paper as claimed in claim 8 **characterized in that** it includes a system for recycling the thickening waters of all the flotation froths and **in that** the flotation cell (22D) is located on the de-inking froth thickening water circuit, to advantage at the output of the sludge press (18).

12. Device for de-inking paper as claimed in one of claims 8 to 11 **characterized in that** the flotation cell is connected to a treatment plant (19, 20, 21) for discharging the flotation froths.

13. Device for de-inking paper as claimed in one of claims 8 to 11 **characterized in that** the flotation cell is connected to a sludge dewatering table.

## Patentansprüche

1. Verfahren zum Deinking von Papier, umfassend, außer einem Schritt der Entfernung der Druckfarbepartikel durch Flotation, einen zusätzlichen Schritt der Abtrennung der oberflächenaktiven Substanzen mit dispergierter Luft, der an dem gesamten Wasser des Deinking-Verfahrens oder an einem Teil davon durchgeführt wird.

2. Verfahren zum Deinking von Papier nach Anspruch 1, **dadurch gekennzeichnet, dass** der Schritt der Abtrennung der oberflächenaktiven Substanzen am Eindickungswasser der gesamten Deinking-Schäume vorgenommen wird.

3. Verfahren zum Deinking von Papier nach Anspruch 1, **dadurch gekennzeichnet, dass** der Schritt der Abtrennung der oberflächenaktiven Substanzen am Wasser der ersten Flotationsschleife vorteilhafterweise am Akzept der Flotation mit gelöster Luft oder an den klaren Filtraten des Scheibenfilters vorgenommen wird.

4. Verfahren zum Deinking von Papier nach Anspruch 1, **dadurch gekennzeichnet, dass** der Schritt der Abtrennung der oberflächenaktiven Substanzen am Eindickungswasser der Flotationsschäume vorgenommen wird.

5. Verfahren zum Deinking von Papier nach einem der vorhergehenden Ansprüche, **dadurch gekennzeichnet, dass** es einen Schritt der Entfernung des die abgetrennten oberflächenaktiven Substanzen enthaltenden Flotationsschaums umfasst.

6. Verfahren zum Deinking von Papier nach Anspruch 5, **dadurch gekennzeichnet, dass** der Flotationsschaum mit Ozon behandelt wird, bevor er in eine Reinigungsstation abgeführt wird.

7. Verfahren zum Deinking von Papier nach Anspruch 5, **dadurch gekennzeichnet, dass** der Flotationsschaum auf Höhe eines Schlammabtropftisches abgeführt wird.

8. Vorrichtung zum Deinking von Papier, die mit einem Pulper (2) und einer ersten Schleife zur Flotation mit dispergierter Luft (6) ausgerüstet ist, die dazu bestimmt ist, die Druckfarbe aus dem Brei zu entfernen, und mindestens eine Zelle zur Flotation mit dispergierter Luft (22) umfasst, die zur Abtrennung der oberflächenaktiven Substanzen von dem Deinking-Wasser bestimmt ist.

9. Vorrichtung zum Deinking von Papier nach Anspruch 8, **dadurch gekennzeichnet, dass** die Flotationszelle (22C, 22B) im Kreis des Eindickungswassers des Scheibenfilters (8) oder am Austritt der Zelle zur Flotation mit gelöster Luft (16) in der ersten Schleife angeordnet ist.

10. Vorrichtung zum Deinking von Papier nach Anspruch 8, **dadurch gekennzeichnet, dass** sie gegebenenfalls eine zweite Flotationsschleife (12) umfasst und dass die Flotationszelle (22D) in dem Kreis der Schäume der Deinking-Flotationszellen (6, 12) und stromab eines Systems zur Rückgewinnung und Eindickung der Flotationsschäume gelegen ist.

11. Vorrichtung zum Deinking von Papier nach Anspruch 8, **dadurch gekennzeichnet, dass** sie ein System zur Rezyklierung des Eindickungswassers der gesamten Flotationsschäume umfasst und dass die Flotationszelle (22A) im Kreis des Eindickungswassers der Deinking-Schäume, vorteilhafterweise am Austritt der Schlammpresse (18), gelegen ist.

12. Vorrichtung zum Deinking von Papier nach einem der Ansprüche 8 bis 11, **dadurch gekennzeichnet, dass** die Flotationszelle mit einer Reinigungsstation (19, 20, 21) für die Abfuhr der Flotationsschäume verbunden ist.

13. Vorrichtung zum Deinking von Papier nach einem der Ansprüche 8 bis 11, **dadurch gekennzeichnet, dass** die Flotationszelle mit einem Schlammabtropftisch verbunden ist.
